# EUROPÄISCHE PATENTANMELDUNG

(11) **EP 0 691 247 A1**
(43) Veröffentlichungstag der Anmeldung: **10.01.1996**
(21) Anmeldenummer: 95109617.1
(22) Anmeldetag: 21.06.1995
(51) Int. Cl.: B60R 22/405

(54) **Gurtaufroller**

(30) Priorität: 07.07.1994 DE 4423958
(71) Anmelder: TRW REPA GMBH, D-73551 Alfdorf (DE)
(72) Erfinder: Hirzel, Uwe, D-71549 Auenwald (DE)
(74) Vertreter: Degwert, Hartmut, Dipl.-Phys.

(57) **Zusammenfassung**

Der Gurtaufroller ist mit einem fahrzeug- und gurtbandsensitiven Ansteuermechanismus ausgestattet, der eine an der Gurtspule (12) begrenzt drehbar gelagerte Steuerscheibe (16, 28) mit einem Steuernocken (28a), eine an einer Seite der Gurtspule schwenkbar gelagerte, durch den Steuernocken (28a) betätigbare Klinke (24) und einen drehbar am Rahmen gelagerten, innenverzahnten Aktivierungsring (30) aufweist. An der Gurtspule (12) ist ferner eine Hemmscheibe (32) drehbar gelagert, die ein Sperrteil (34) trägt und durch einen Reibring (36) gegenüber dem Rahmen gebremst wird. Die Klinke (24) weist einen Ansatz (24b) auf, der bei Drehung der Gurtspule in Aufwickelrichtung an dem Sperrteil (34) angreift, welches dann eine Einsteuerung der Klinke (24) in die Innenverzahnung des Aktivierungsringes (30) verhindert. Erst nach einer anschließenden Drehung der Gurtspule in Abwickelrichtung über einen vorbestimmten Drehwinkel kommt die Klinke (24) von dem Sperrteil (34) frei.

## Beschreibung

Die Erfindung betrifft einen Gurtaufroller für ein Insassen-Rückhaltesystem in Fahrzeugen, mit einer drehbar in einem Rahmen gelagerten Gurtspule, an der eine Aufrollfeder angreift, und einem fahrzeug- und gurtbandsensitiven Ansteuermechanismus, der eine an der Gurtspule begrenzt drehbar gelagerte Steuerscheibe mit einem Steuernocken, eine an einer Seite der Gurtspule schwenkbar gelagerte, durch den Steuernocken betätigbare Klinke und einen drehbar am Rahmen gelagerten, innenverzahnten Aktivierungsring aufweist, in dessen Innenverzahnung die Klinke durch den Steuernocken einsteuerbar ist.

Aufgrund der gurtbandsensitiven Sperrfunktion kann bei einem solchen Gurtaufroller eine unbeabsichtigte Sperrung auftreten, wenn der Aufrollvorgang abrupt beendet wird, beispielsweise durch Anstoßen der Steckzunge an einem Hindernis oder dem Umlenkbeschlag. Die Steuerscheibe ist dann durch ihre Massenträgheit bzw. die der daran angekoppelten Trägheitsscheibe bestrebt, ihre Drehung fortzusetzen, während die Klinke mit der Gurtspule zum Stillstand kommt. Folglich wird die Klinke in die Innenverzahnung des Aktivierungsringes eingesteuert, der dann seinerseits die Sperrung auslöst.

Es sind bereits verschiedene Maßnahmen vorgeschlagen worden, um eine solche unerwünschte Sperrung zu vermeiden. Diese Maßnahmen sind jedoch mit relativ hohem Aufwand bei der Fertigung und Montage verbunden; dennoch wird im Falle einer besonders abrupten Beendigung der Aufrollbewegung der Gurtspule ihre Sperrung nicht zuverlässig verhindert.

Durch die Erfindung wird ein Gurtaufroller zur Verfügung gestellt, bei dem eine solche unerwünschte Sperrung mit einfachen Mitteln, einer geringen Anzahl von zusätzlichen Bauteilen und ohne Justierung nach der Montage verhindert wird. Bei dem erfindungsgemäßen Gurtaufroller ist an der Gurtspule eine Hemmscheibe drehbar gelagert, die ein Sperrteil trägt und durch Reibung gegenüber dem Rahmen gebremst wird; die Klinke weist einen Ansatz auf, der
- bei Drehung der Gurtspule in Aufwickelrichtung an dem Sperrteil angreift, das dann die Einsteuerung der Klinke in die Innenverzahnung verhindert, und
- erst nach anschließender Drehung der Gurtspule in Abwickelrichtung über einen vorbestimmten Drehwinkel von dem Sperrteil freikommt.

Für die Verwirklichung der angestrebten Funktion, nämlich das Verhindern einer unerwünschten Sperrung, werden im wesentlichen nur zwei zusätzliche Bauteile benötigt, nämlich die Hemmscheibe mit dem daran gebildeten Sperrteil und ein Reibungselement, welches zwischen Rahmen und Hemmscheibe wirkt, vorzugsweise ein die Hemmscheibe umgreifender Reibring, der drehfest am Rahmen gehalten ist. Die Hemmscheibe ist gegenüber der Gurtspule leicht drehbar, wird jedoch durch Reibung gebremst. Bei der Drehung der Gurtspule in Abwickelrichtung stößt aber die an ihrer Seite gelagerte Klinke gegen das Sperrteil, so daß die Hemmscheibe sich anschließend mit der Gurtspule dreht. In diesem Zustand verhindert das Sperrteil eine Verschwenkung der Klinke, so daß diese außer Eingriff mit der Innenverzahnung des Aktivierungsringes gehalten wird. Zur Freigabe der Klinke ist erst eine Drehung der Gurtspule in Abwickelrichtung über einen vorbestimmten Drehwinkel von einigen Grad erforderlich. Da diese Drehung in Abwickelrichtung erst nach einer etwaigen plötzlichen Abbremsung der Aufwickelbewegung der Gurtspule zustandekommen kann, wird die unbeabsichtigte Sperrung zuverlässig vermieden.

Die zusätzlich zu einem herkömmlichen Gurtaufroller erforderlichen Bauteile, nämlich Hemmscheibe und Reibelement, können leicht in vorhandene Konstruktionen integriert werden und verursachen kaum zusätzliche Kosten. Da für die Abbremsung der Hemmscheibe nur eine sehr geringe Reibkraft erforderlich ist, wird die Gurtspulendrehung kaum behindert, so daß der Einfluß auf die Aus- und Rückzugskraft vernachlässigbar ist.

Weitere Merkmale und Vorteile der Erfindung ergeben sich aus der folgenden Beschreibung und aus der Zeichnung, auf die Bezug genommen wird. In der Zeichnung zeigen:

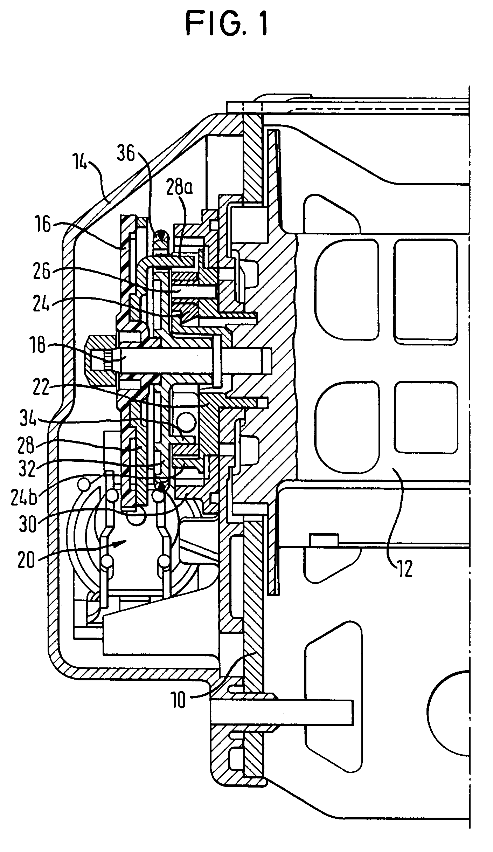

- Fig. 1 einen axialen Teilschnitt des Gurtaufrollers;

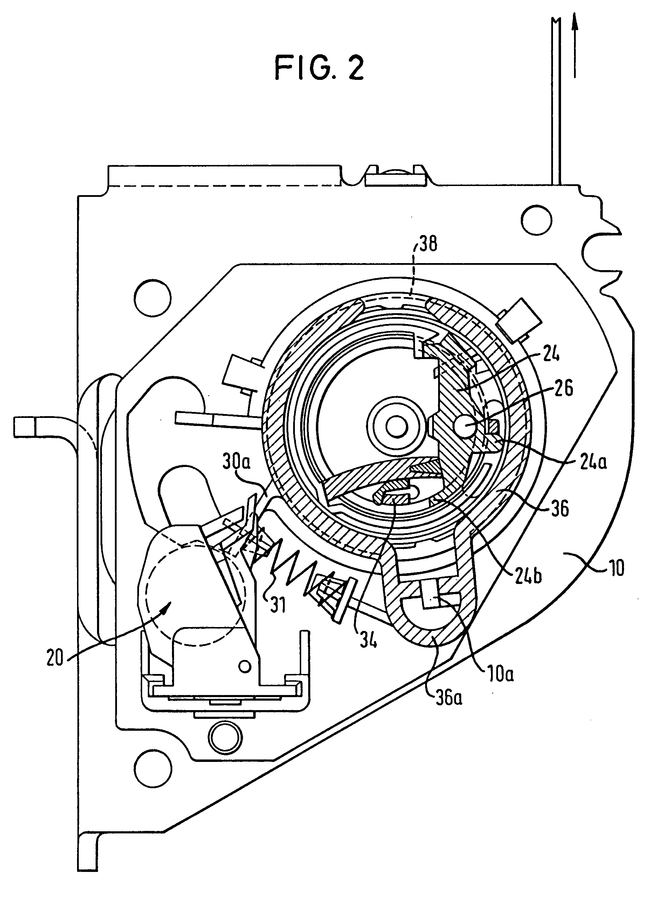

- Fig. 2 eine schematische Seitenansicht des Gurtaufrollers im Zustand der Abwicklung;
- Fig. 3 eine entsprechende Seitenansicht bei eingesteuerter Klinke; und
- Fig. 4 eine entsprechende Seitenansicht bei Drehung der Gurtspule in Aufwickelrichtung.

In einem lasttragenden Rahmen 10 ist eine Gurtspule 12 drehbar gelagert. Innerhalb einer auf die Seite des Rahmens 10 aufgesetzten Schutzkappe 14 ist ein fahrzeug- und gurtbandsensitiver Ansteuermechanismus für das (nicht gezeigte) Sperrsystem des Gurtaufrollers untergebracht. Auf der gegenüberliegenden Seite des Gurtaufrollers ist eine (nicht gezeigte) Aufrollfeder in üblicher Weise angeordnet.

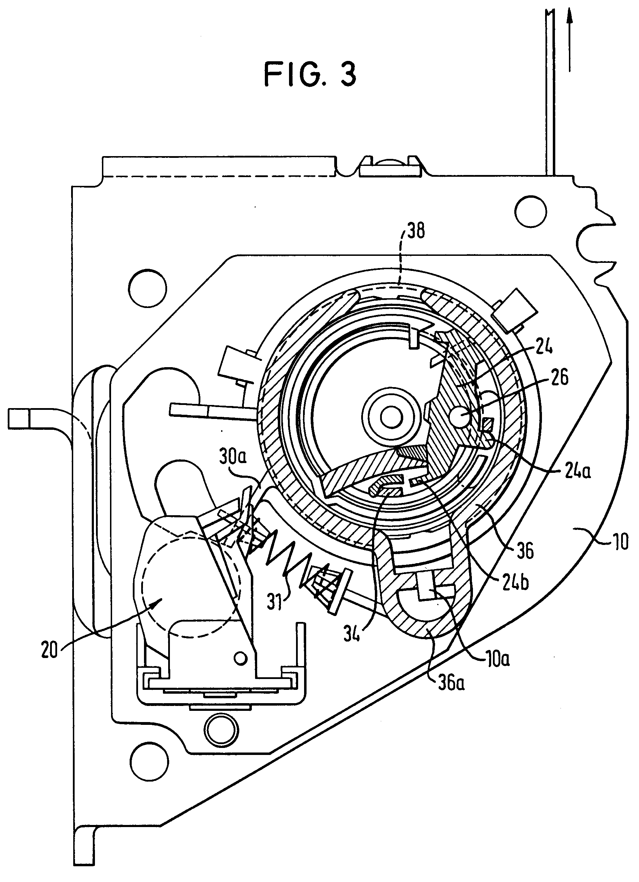

Der Ansteuermechanismus umfaßt eine außenverzahnte Steuerscheibe 16, die mittels eines Lagerstiftes 18 drehbar an der Gurtspule 12 gelagert ist. Mit der Außenverzahnung der Steuerscheibe 16 wirkt ein Trägheitssensor 20 zusammen, der in bekannter Weise aus einer Massekugel und einer schwenkbar gelagerten, durch die Massekugel in die Außenverzahnung der Steuerscheibe 16 einsteuerbare Auslöseklinke gebildet ist. An einer drehfest mit der Gurtspule 12 verbundenen Lagerplatte 22 ist eine Klinke 24 mittels eines Lagerstiftes 26 schwenkbar gelagert. An die aus Kunststoff gebildete Steuerscheibe 16 ist zur Erhöhung ihrer Massenträgheit eine Trägheitsscheibe 28 aus einem metallischen Werkstoff drehfest angekoppelt. Diese Trägheitsscheibe 28 ist mit einem Steuernocken 28a versehen, der mit der Klinke 24 zusammenwirkt und bei einer Relativdrehung zwischen Gurtspule und Steuerscheibe 16 gegen einen radialen Fortsatz 24a der Klinke 24 drückt, wodurch diese mit ihrer Klinkenspitze auswärts verschwenkt wird, wie in Fig. 3 dargestellt ist. In diesem Zustand greift sie in eine Innenverzahnung eines Aktivierungsringes 30 ein, der die Lagerplatte 22 umgibt und drehbar am Rahmen 10 gelagert ist. Der Aktivierungsring 30 ist mit einem radialen Arm 30a versehen, der durch eine Druckfeder 31 am Rahmen 10 abgestützt ist. Durch Drehung des Aktivierungsringes 30 wird die Sperrklinke des (nicht gezeigten) Sperrsystems in bekannter Weise eingesteuert.

Mittels des Lagerstiftes 18 ist ferner eine Hemmscheibe 32 drehbar an der Seite der Gurtspule 12 gelagert. Die Hemmscheibe 32 ist mit einem senkrecht in Richtung auf die Lagerplatte 22 zu gerichteten Sperrelement 34 versehen, welches durch einen schmalen Wandungsteil gebildet ist, der sich bogenförmig am Außenumfang der Hemmscheibe 32 über einen Winkel von einigen Grad erstreckt. Den Außenumfang der Hemmscheibe 32 umgreift ein Reibring 36, in dessen Außenumfang eine Nut gebildet ist. In dieser Nut ist ein Federring 38 aufgenommen, der den Reibring 36 mit mäßiger Spannung gegen den Außenumfang der Hemmscheibe 32 drückt. Der Reibring 36 ist mit einem bügelförmigen Halteteil 36a versehen, welches an einer seitlich abstehenden Fahne 10a des Rahmens 10 gehalten wird, so daß der Reibring 36 drehfest gehalten ist und durch den Reibeingriff mit der Hemmscheibe 32 deren Drehung bremst. Diese Bremswirkung ist allerdings so gering bemessen, daß die Auf- und Abrollkräfte an der Gurtspule 12 nicht merklich beeinflußt werden.

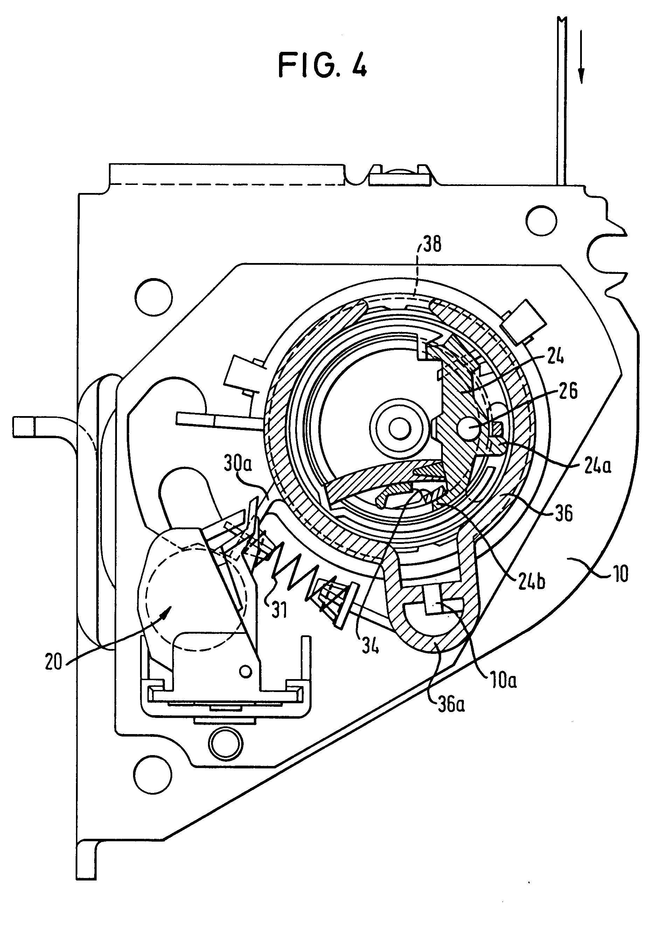

Die Klinke 24 weist an ihrem von der Klinkenspitze abgewandten Ende einen länglichen Ansatz 24b auf, der schwach bogenförmig gekrümmt ist. Wenn die Gurtspule in Aufwickelrichtung gedreht wird, wie in Fig. 4 gezeigt, bewegt sich der Ansatz 24b zunächst in Richtung auf das Sperrteil 34 zu und wird dann radial außerhalb von ihm daran vorbeibewegt, bis das Sperrteil 34 an der Klinke 24 anstößt. Anschließend wird die Hemmscheibe 32, die aufgrund der durch den Reibring 36 ausgeübten Reibung bis zu diesem Zeitpunkt in Ruhe verbleibt, mitgedreht und dreht sich mit der Gurtspule bis zu einer Umkehrung der Drehrichtung. Wenn diese Drehrichtungsumkehr stattfindet, löst sich das Sperrteil 34 von der Klinke 24, und die Hemmscheibe 32 wird erneut durch Reibung angehalten. Solange aber das Sperrteil 34 den Ansatz 24b hintergreift, also über einen Drehwinkel von einigen Grad, welcher der Erstreckung des Sperrteils 34 in Umfangsrichtung entspricht, ist die Klinke 24 an einer Schwenkbewegung in Eingriff mit der Innenverzahnung des Aktivierungsringes 30 gehindert, da der Ansatz 24b am Sperrteil 34 anstößt. Erst wenn nach dieser Drehung in Abwickelrichtung über einige Grad das Sperrteil 34 den Ansatz 24b freigibt, kann die Klinke 24 fahrzeug- oder gurtbandsensitiv über den Steuernocken 28a verschwenkt werden und mit der Innenverzahnung des Aktivierungsringes 30 in Eingriff kommen, wie in Fig. 3 dargestellt ist.

## Patentansprüche

1. Gurtaufroller für ein Insassen-Rückhaltesystem in Fahrzeugen, mit einer drehbar in einem Rahmen (10) gelagerten Gurtspule (12), an der eine Aufrollfeder angreift, und einem fahrzeug- und gurtbandsensitiven Ansteuermechanismus, der eine an der Gurtspule (12) begrenzt drehbar gelagerte Steuerscheibe (16, 28) mit einem Steuernocken (28a), eine an einer Seite der Gurtspule schwenkbar gelagerte, durch den Steuernocken (28a) betätigbare Klinke (24) und einen drehbar am Rahmen gelagerten, innenverzahnten Aktivierungsring (30) aufweist, in dessen Innenverzahnung die Klinke (24) durch den Steuernocken (28a) einsteuerbar ist, dadurch gekennzeichnet, daß an der Gurtspule (12) ferner eine Hemmscheibe (32) drehbar gelagert ist, die ein Sperrteil (34) trägt und durch Reibung gegenüber dem Rahmen (10) gebremst wird, und daß die Klinke (24) einen Ansatz (24b) aufweist, der
- bei Drehung der Gurtspule (12) in Aufwickelrichtung an dem Sperrteil (34) angreift, das dann die Einsteuerung der Klinke (24) in die Innenverzahnung verhindert, und
- erst nach anschließender Drehung der Gurtspule (12) in Abwickelrichtung über einen vorbestimmten Drehwinkel von dem Sperrteil (34) freikommt.

2. Gurtaufroller nach Anspruch 1, dadurch gekennzeichnet, daß die Hemmscheibe (32) durch Anstoßen der Klinke (24) an dem Sperrteil (34) bei Drehung der Gurtspule (12) gegen eine Reibkraft relativ zum Rahmen (10) mitdrehbar ist, wobei diese Reibkraft gegenüber der Kraft der Aufrollfeder vernachlässigbar klein ist.

3. Gurtaufroller nach Anspruch 1 oder 2, dadurch gekennzeichnet, daß das Sperrteil (34) durch ein senkrecht von der Hemmscheibe (32) abstehendes Wandungsteil gebildet ist und der Ansatz (24b) der Klinke bei Drehung der Gurtspule (12) in Aufwickelrichtung radial außen hinter diesen Wandungsteil greift.

4. Gurtaufroller nach einem der vorstehenden Ansprüche, dadurch gekennzeichnet, daß die Hemmscheibe (32) an ihrem Außenumfang von einem Reibring (36) umfaßt wird, der drehfest am Rahmen (10) gehalten ist.

5. Gurtaufroller nach Anspruch 4, dadurch gekennzeichnet, daß der Reibring (36) seinerseits von einem Federring (38) umfaßt wird.
